(19) Europäisches Patentamt

European Patent Office

Office européen des brevets

(11) **EP 0 836 907 A2**

(12) **EUROPÄISCHE PATENTANMELDUNG**

(43) Veröffentlichungstag:
22.04.1998 Patentblatt 1998/17

(51) Int. Cl.⁶: **B23K 26/14**

(21) Anmeldenummer: 97118061.7

(22) Anmeldetag: 17.10.1997

(84) Benannte Vertragsstaaten:
AT BE CH DE DK ES FI FR GB GR IE IT LI LU MC NL PT SE

(30) Priorität: 18.10.1996 DE 19643164

(71) Anmelder:
**LCTec Laser- und Computertechnik GmbH**
**D-87459 Pfronten (DE)**

(72) Erfinder:
• **Seebaum, Dirk Dr.-Ing.**
**31840 Hess. Oldendorf (DE)**

• **Kuhl, Michael Dipl.-Phys.**
**87629 Füssen (DE)**
• **Wrba, Peter Dr.-Ing.**
**87647 Unterthingau (DE)**
• **Hildebrand, Peter Dipl.-Phys.**
**87484 Nesselwang (DE)**
• **Reisacher, Martin Dipl.-Ing.**
**87439 Kempten (DE)**

(74) Vertreter:
**Beetz & Partner**
**Patentanwälte**
**Steinsdorfstrasse 10**
**80538 München (DE)**

(54) **Vorrichtung und Verfahren zum Bearbeiten von Werkstücken mit einem Laserstrahl**

(57) Die Erfindung betrifft eine Vorrichtung und ein Verfahren zum Bearbeiten von Werkstücken (7) mit einem Laserstrahl, wobei eine Düse (1) zum Aufbringen eines gerichteten Gasstrahls (4) auf die Werkstückoberfläche (6) vorgesehen ist. Der Gasstrahl (4) trifft neben der Bearbeitungsstelle (9) des Laserstrahls, d.h. neben der Wechselwirkungszone, auf die Werkstückoberfläche (6). Die Bearbeitungsstelle (9) ist dabei relativ zu einem Auftreffbereich (5) des Gasstrahls (4) auf der Werkstückoberfläche (6) im wesentlichen in Richtung des größten Druckgradienten $D_{max}$ angeordnet, der durch den auf die Werkstückoberfläche (6) auftreffenden Gasstrahl (4) verursacht wird. Die Bearbeitungsstelle (9) kann dabei so gewählt werden, daß an der Bearbeitungsstelle (9) eine maximale kinetische Energie der Gasmoleküle vorliegt.

Fig. 1

## Beschreibung

Die Erfindung betrifft eine Vorrichtung und ein Verfahren zum Bearbeiten von Werkstücken mit einem Laserstrahl, wobei eine Düse zum Aufbringen eines Gasstrahls verwendet wird und der Gasstrahl neben einer Bearbeitungsstelle bzw. einer Wechselwirkungszone des Laserstrahls auf die Werkstückoberfläche trifft.

Es ist bekannt, daß die zur Verfügung stehende Laserleistung und die in der Wechselwirkungszone entstehende exotherme Reaktion im Fall des Schmelzabtragens mit Sauerstoffunterstützung in den meisten Fällen nicht voll ausgenutzt werden kann, da unter anderem das aufgeschmolzene Materialvolumen schnell die Leistungsfähigkeit des Schmelzaustriebs übersteigt. Der Schmelzaustrieb ist vor allem durch das eingesetzte Prozeßdüsensystem bestimmt, dessen Aufgabe darin besteht, über eine Gasströmung eine gerichtete Schmelzenbewegung zu erzeugen, die das Abtragvolumen im schmelzflüssigen Zustand aus der Wechselwirkungszone entfernt, ohne daß es in benachbarten Werkstückbereichen wieder anhaftet und erstarrt.

Die Schmelzströmung kann sich ihre Antriebskraft beispielsweise aus der Volumenkraft des auf den Schmelzfilm wirkenden Gasdrucks und der Oberflächenkraft durch Reibung bzw. Scherung des an der Schmelze vorbeiströmenden Gases ziehen. Neben einigen anderen Größen, wie z.B. der dynamischen Viskosität und der Oberflächenspannung der Schmelze, hat der Druck des vorbeiströmenden Gases und die Schubspannung aufgrund der Reibung zwischen Schmelze und Gasstrahl entscheidenden Einfluß auf die Geschwindigkeitsverteilung und den Druck innerhalb des Schmelzfilms. Die Größe der Druck- und Scherkräfte in der Bearbeitungszone wird beispielsweise vom Strömungsfeld des Gases bestimmt.

Gemäß der DE-41 18 693 A1 ist es beispielsweise bekannt, Düsen um die Achse der Austriebsöffnung für den Laserstrahl anzuordnen, welche sich in der Achse des Laserstrahls zu einem Gesamtstrahl vereinigen, der sich in Richtung auf das Werkstück zu bewegt und das Schmelzgut beispielsweise aus der Schnittfuge des Werkstückes austreibt. Gemäß dieser Druckschrift ist somit eine koaxiale Anordnung, d.h. eine gleichachsige Führung von Gas- und Laserstrahl, beschrieben.

Ein Nachteil einer derartigen gleichachsigen Führung liegt darin, daß der in der Wechselwirkungszone auftreffende Gasstrahl die Schmelze annähernd rotationssymmetrisch aus der Wechselwirkungszone entfernt. Daher kann es dazu kommen, daß das ausgetriebene Abtragvolumen, welches sich noch im schmelzflüssigen Zustand befindet, sich an Bereichen des Materials ablagern kann, welche vom Laserstrahl nicht mehr erreicht werden. Derartiges wiedererstarrtes Material führt nun dazu, daß die Oberflächengüte des Materials abnimmt. Als direkte Folge daraus liegt die Abtragrate mit koaxialen Düsen bei etwa 0,5 - 5 $mm^3$/min, bei geforderten Oberflächengüten von $R_z$ (DIN) $< 10 \mu m$.

Es ist eine Aufgabe der Erfindung, eine Vorrichtung und ein Verfahren zum Bearbeiten von Werkstücken mit einem Laserstrahl zu schaffen, die hohe Abtragraten bei einer hohen Oberflächengüte realisieren.

Erfindungsgemäß ist eine Vorrichtung und ein Verfahren zum Bearbeiten von Werkstücken mit einem Laserstrahl gemäß den Ansprüchen 1 und 11 vorgesehen. Die abhängigen Ansprüche geben vorteilhafte Weiterentwicklungen und Ausführungsformen der Erfindung an.

Die erfindungsgemäße Vorrichtung weist eine Düse zum Aufbringen eines gerichteten Gasstrahls auf die Werkstückoberfläche auf, wobei der Gasstrahl mit einem Abstand A zu einer Bearbeitungsstelle des Laserstrahls auf die Werkstückoberfläche trifft. Die Bearbeitungsstelle entspricht einer Wechselwirkungszone zwischen dem Laserstrahl und dem Werkstückmaterial. Die Bearbeitungsstelle ist relativ zu einem Auftreffbereich des Gasstrahls auf die Werkstückoberfläche im wesentlichen in Richtung eines größten Druckgradienten angeordnet, der von dem auf die Werkstückoberfläche auftreffenden Gasstrahl verursacht wird.

Der auf die Werkstückoberfläche treffende Gasstrahl kann parallel zum Laserstrahl verlaufen und/oder senkrecht zur Werkstückoberfläche ausgerichtet sein.

Weiterhin kann ein Abstand zwischen der Bearbeitungsstelle und dem Auftreffbereich derart gewählt werden, daß eine hohe kinetische Energie der Gasmoleküle an der Bearbeitungsstelle vorliegt. Insbesondere kann es vorteilhaft sein, daß die kinetische Energie an der Bearbeitungsstelle ein Maximum aufweist. Unter bestimmten Anwendungsbedingungen kann jedoch auch der Abstand auf Null reduziert werden.

Durch die Erfindung werden mehrere Vorteile bei der Laserbearbeitung erzielt. Zum einen kann durch einen parallel zum Laserstrahl und/oder senkrecht zur Werkstückoberfläche angeordneten Gasstrahl eine relativ große Abstandsunempfindlichkeit zwischen einer Auslaßöffnung der Düse und der Werkstückoberfläche erzielt werden. Dadurch werden bei sich in bestimmten Grenzen ändernden Abständen gleiche Strömungsverhältnisse an der Bearbeitungsstelle erzielt. Würde der Gasstrahl etwa mit einem Winkel zum Laserstrahl angeordnet sein, so würde bei einem Verändern des Abstands zwischen einem Laserkopf und dem zu bearbeitenden Material der Abstand zwischen dem Auftreffbereich des Gasstrahls und der Wechselwirkungszone ebenso verändert werden. Dies führt jedoch zu sich verändernden Strömungsverhältnissen an der Bearbeitungsstelle, so daß sich unter anderem die Bearbeitungsreproduzierbarkeit verschlechtern würde.

Hierbei sei angemerkt, daß die Düse am Laserkopf angeordnet sein kann und somit bei jeder Bewegung des Laserkopfs mitgeführt wird. Sofern zweckmäßig, kann auch eine andere Anordnung der Düse relativ zum Laserkopf vorgesehen werden.

Durch die Anordnung des Gasstrahls parallel zum Laserstrahl bzw. durch die senkrechte Ausrichtung des Gasstrahls relativ zur Werkstückoberfläche bleibt somit die Lage des durch den Gasstrahl entstehenden Druckprofils auf der Werkstück oberfläche relativ zur Laserstrahlachse für sich variierende Abstände zwischen der Düse und der Werkstückoberfläche konstant. Die Ausbildung eines solchen Gasstrahls kann beispielsweise durch zwei diametral entgegengesetzt angeordnete Düsen erreicht werden, deren Gasstrahlen schiefwinklig aufeinandertreffen und gemäß einer vektoriellen Impulsaddition einen resultierenden Gasstrahl bilden, der parallel zur Laserstrahlachse ausgerichtet sein kann.

Natürlich können auch andere Düsenanordnungen vorgesehen sein. Beispielsweise kann etwa nur eine Düse vorgesehen sein, welche einen Gasstrahl dezentral zum Laserstrahl erzeugt.

Die oben genannte Düse bzw. die oben genannten Düsen können Laval-Düsen sein. Weiterhin können diese Düsen eine an der Austrittsstelle im wesentlichen rechteckige Querschnittsform aufweisen. Dadurch kann sich auf der Werkstückoberfläche ein Isobarenverlauf ausbilden, der eine längliche Form aufweist. Natürlich kann eine derartige längliche Ausbildung des Isobarenverlaufs auch durch Düsen erzielt werden, welche einen anderen Austrittsbereichsquerschnitt aufweisen (jeweils abhängig von der fluidmechanischen Auslegung).

Durch den länglichen isobaren Verlauf werden Druckgradienten erzeugt, die ihr Maximum im Bereich der schmalen Seite des Isobaren aufweisen, d.h. dort, wo die Isobaren am dichtesten zueinander angeordnet sind, wobei der Druckgradient senkrecht zu den Isobaren verläuft.

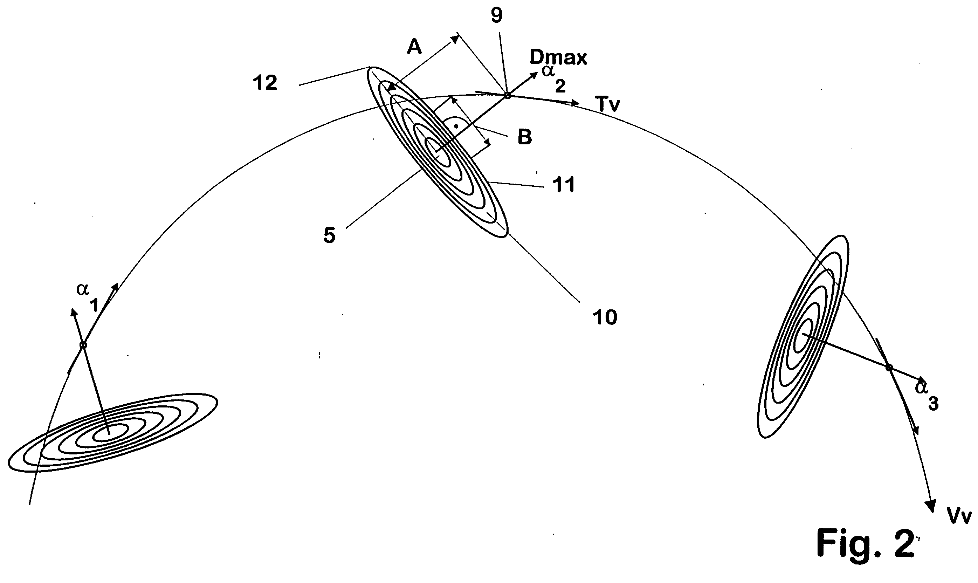

Wie voranstehend schon angedeutet, wird die Hauptbewegungsrichtung der Schmelze durch den Verlauf des größten Druckgradienten vorgegeben. Beispielsweise kann es vorteilhaft sein, den Bearbeitungspunkt relativ zum größten Druckgradienten derart anzuordnen, daß sich bezüglich der Vorschubrichtung ein Winkel von 45° ergibt (vgl. z.B. Fig. 2).

Weiterhin kann der Abstand zwischen dem Auftreffbereich des Gasstrahls und der Wechselwirkungszone weitergehend dahin verändert werden, daß sich die Wechselwirkungszone bzw. die Bearbeitungsstelle dort befindet, wo die kinetische Energie der Gasströmung ein Maximum aufweist. Dadurch kann der Schmelzaustrieb weiter verbessert werden.

Darüber hinaus kann es vorteilhaft sein, die Düse am Laserkopf bewegbar anzuordnen. Dabei kann die Düse beispielsweise drehbar zum Laserkopf vorgesehen sein, so daß die Bewegung der Düse etwa die sechste Achse einer 6-Achs-Werkstückbearbeitung darstellt. Die Düse kann somit entsprechend geeigneten Positionssignalen über beispielsweise eine SPS (speicherprogrammierbare Steuerung) in ihrer Lage zur Vorschubrichtung verstellt werden. Zur Einstellung des Winkels α kann die SPS hierbei verschiedene Eingänge verwerten. Beispielsweise kann etwa die zu bearbeitende Kontur des Werkstücks eine Rolle spielen. Wird beispielsweise ein sehr enger Radius bearbeitet, so kann es vorteilhaft sein, daß ein "Ausblasen" mit einem anderen Winkel erfolgt, als wenn eine gerade verlaufende Nut erstellt wird. Weiterhin kann der Winkel α beispielsweise von dem zu bearbeitenden Material des Werkstücks, der Verfahrgeschwindigkeit des Werkstücks bzw. des Laserkopfs, der Laserleistung und/oder von Signalen eines Abstands- und/oder Tiefensensors abhängen. Der Winkel α kann auch von der Art der Bearbeitung abhängig sein. Wird beispielsweise ein Laserschneiden durchgeführt, so kann sich ein anderer Winkel ergeben, als etwa beim Laserschmelzabtragen.

Zur weiteren Verbesserung der Werkstückoberfläche kann auf die Werkstückoberfläche Trockeneis bzw. ein anderes abrasives Medium aufgebracht werden, wodurch der Schmelzaustrag verbessert und eine Nachreinigung der bearbeiteten Werkstückoberfläche durchführt wird. Das Aufbringen von Trockeneis kann relativ zur Vorschubrichtung vor- und/oder nachgeschaltet sein. Durch das Aufblasen von Trockeneis kann eine hohe Reinigungswirkung erzielt werden. Mit dem Aufbringen von Trockeneis ist es möglich, die am Werkstück anhaftenden, wiedererstarrten Schmelzeteilchen abzulösen. Weiterhin kann dadurch der Schmelzaustrieb verbessert werden. Das Trockeneis kann beispielsweise über die Düse zum Aufbringen des Gasstrahls in den Prozeß eingebracht werden oder über eine separate Düse. Eventuell kann es vorteilhaft sein, daß das Trockeneis mit einer koaxialen Düse aufgebracht wird (Abstand A gleich Null). In diesem Fall kann sich eine exzentrische Gaszufuhr evtl. erübrigen, so daß sich eine eigene, unabhängige Lösung ergeben würde.

Das Trockeneis kann durch verschiedene Verfahren auf das Werkstück aufgebracht werden, beispielsweise mit und ohne Trägergas, über eine rotierende Scheibe, usw. Das Trägergas kann hierbei beispielsweise Luft, Sauerstoff oder mit $O_2$ angereicherte Luft sein. Durch das Trockeneis wird in die Schmelze durch eine explosionsartige Verdampfung eine Druckwelle eingebracht, wodurch eine Impulskraft auf die Schmelze ausgeübt werden kann. Dies führt zu einem verbesserten Austrag der Schmelze. Das Trockeneis ($CO_2$) kann unter Bildung von Trockeneisschnee auch verdüst werden.

Weiterhin kann es von Vorteil sein, dem Laser Leistungsspitzen aufzumodulieren, um ein besseres Aufreißen der Oberfläche der Schmelze zu ermöglichen, so daß die angreifende Gasströmung eine bessere Austriebswirkung entfalten kann. Durch das Aufmodulieren von Leistungsspitzen kann beispielsweise die Viskosität und damit die Oberflächenspannung der Schmelze reduziert werden.

Erfindungsgemäß ist weiterhin ein Verfahren zum Bearbeiten von Werkstücken mittels Laserstrahlschmelzabtragen vorgesehen, wobei ein Laserstrahl durch einen Laser emittiert wird, ein gerichteter Gasstrahl auf eine Werkstückoberfläche neben einer Bearbeitungsstelle des Laserstrahls aufgebracht wird und eine Düse für den Gasstrahl derart angeordnet wird, daß die Bearbeitungsstelle im wesentlichen in Richtung eines größten Druckgradienten des Gasstrahls liegt.

Weiterhin kann die Düse bezüglich des Gasstrahls dreh- und/oder verschiebbar angeordnet sein. Die Verstelleinrichtung der Düse kann hierbei von einer Steuereinheit angesteuert werden. Es kann möglich sein, die Düse nicht nur um den Laserkopf zu drehen, sondern dieselbe auch in ihrem Abstand zum Laserkopf einzustellen. Dadurch ist es möglich, die Austriebsrichtung der Schmelze zu variieren und den Abstand des Auftreffbereichs des Gasstrahls zu der Wechselwirkungszone in geeigneter Weise einzustellen.

Würde beispielsweise ein mäanderförmiger Abtrag durchgeführt werden, so würde die Düse beispielsweise im Bereich der Vorschubrichtungsumkehr eine Drehbewegung um 180° ausführen, um dann nach der Drehrichtungsumkehr und nach dem Wiedereinschalten der Laserleistung eine optimale Gasströmung an der Bearbeitungsstelle zu verursachen.

Zusammenfassend kann durch die erfindungsgemäße Vorrichtung und das erfindungsgemäße Verfahren eine große Verbesserung der Abtragrate beim Laserschmelzabtragen erzielt werden, wobei eine hohe Oberflächengüte gewährleistet ist. Durch die Anordnung der Bearbeitungsstelle bzw. des Auftreffpunkts des Laserstrahls auf der Werkstückoberfläche in einem Bereich, in dem der von dem Gasstrahl verursachte Druckgradient im wesentlichen ein Maximum aufweist, können sehr gute Austragsergebnisse erzielt werden. Weiterhin erweist sich der längliche Isobarenverlauf als sehr vorteilhaft, da dadurch ein gerichteter Schmelzaustrag möglich wird. Weiterhin ist ein derartiger Isobarenverlauf unsensibler gegen Achsverschiebungen senkrecht zum maximalen Druckverlauf, da die Isobaren an der Längsseite über einen weiten Bereich annähernd ohne Krümmung verlaufen, d.h. angenähert eine Gerade bilden.

Ein weiterer Vorteil der erfindungsgemäßen Lösung liegt darin, daß durch den senkrecht zur Werkstückoberfläche verlaufenden Gasstrahl bzw. durch den zum Laserstrahl parallel eingestellten Gasstrahl eine hohe Abstandsunabhängigkeit betreffend der z-Achse erzielt werden kann. D.h., daß der Laserkopf mit daran angeordneter Gasdüse in einem weiten Bereich des Abstands zwischen Laserkopf bzw. zwischen Gasdüse und Werkstückoberfläche eingestellt werden kann, ohne daß sich die Strömungsverhältnisse an der Bearbeitungsstelle wesentlich ändern. Somit kann zusätzlich eine starke Verbesserung der Bearbeitungsflexibilität (beispielsweise eine bessere Konturbearbeitung) erzielt werden.

Nachfolgend werden Ausführungsbeispiele der Erfindung anhand von schematischen Zeichnungen beschrieben. Es zeigen:

Fig. 1     eine erfindungsgemäße Vorrichtung;

Fig. 2     eine Darstellung der Anordnung der Isobaren relativ zur Bearbeitungsstelle an verschiedenen Bahnpunkten des Vorschubverlaufs;

Fig. 3     eine Darstellung der Anordnung der Isobaren relativ zur Bearbeitungsstelle mit einem zur Fig. 2 unterschiedlichen Vorschubverlauf; und

Fig. 4     eine erfindungsgemäße Vorrichtung gemäß einer weiteren Ausführungsform mit einer Zusatzdüse zum Aufbringen von Trockeneis auf die Werkstückoberfläche.

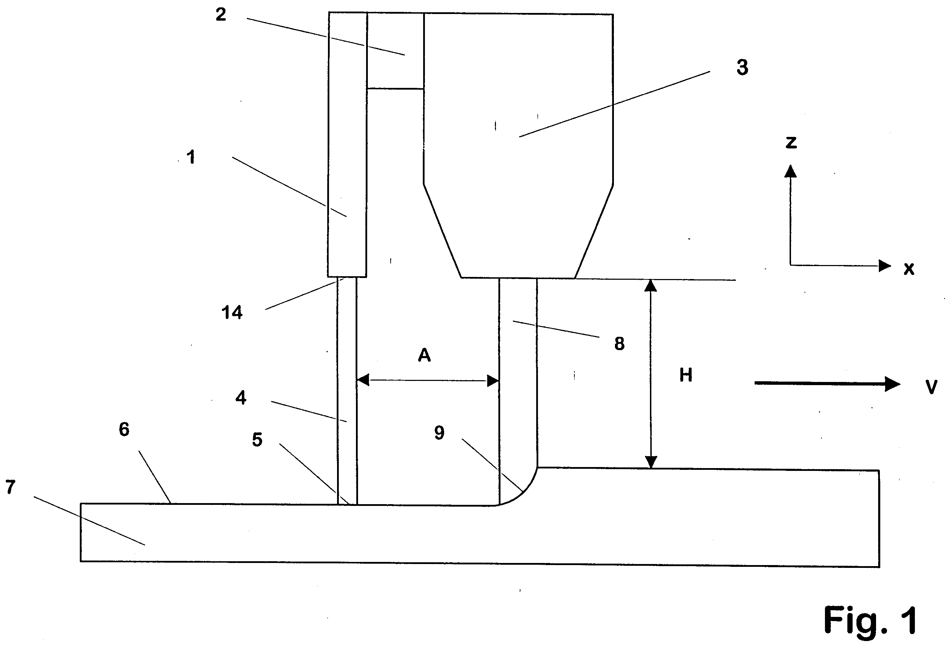

In der Fig. 1 ist eine Düse 1 mit einem Düsenbetätiger 2 dargestellt. Der Düsenbetätiger 2 kann die Düse 1 relativ zum Laserkopf 3 einstellen. Aus der Düse 1 tritt an einer Gasaustrittsstelle 14 ein Gasstrahl 4 aus, der in einem Auftreffbereich 5 auf eine Werkstückoberfläche 6 eines Werkstücks 7 auftrifft.

Aus dem Laserkopf 3 tritt ein Laserstrahl 8 aus, der an einer Bearbeitungsstelle 9 auf das Werkstück 7 bzw. die Werkstückoberfläche 6 trifft. An der Bearbeitungsstelle 9 bildet sich eine Wechselwirkungszone zwischen dem Laserstrahl 4 und dem Werkstückmaterial. Mit einem nach rechts weisenden Pfeil ist eine relative Vorschubrichtung V dargestellt. Hierbei kann entweder der Laserkopf 3 mit über den Düsenbetätiger 2 daran angeordneter Düse 1 in der dargestellten Richtung über das Werkstück 7 bewegt werden. Es ist jedoch auch möglich, daß das Werkstück 7 selbst bei einem ortsfesten Laserkopf 3 bewegt wird. Natürlich kann auch das Werkstück 7 und der Laserkopf 3 jeweils Vorschubbewegungen durchführen, die dann in einem relativen Vorschub resultieren.

Der Düsenbetätiger 2 kann derart ausgebildet sein, daß er einen Abstand A zwischen dem Gasstrahl 4 bzw. dem Auftreffbereich 5 und dem Laserstrahl 8 verändern kann. Weiterhin kann der Düsenbetätiger 2 derart ausgebildet sein, daß die Düse 1 um den Laserkopf 3 drehbar angeordnet ist. Hierbei können Drehwinkel bis 360° realisiert werden. Weiterhin ist mit einer Höhe H ein Abstand zwischen dem unteren Ende des Laserkopfs 3 und der Werkstückoberfläche 6 bezeichnet.

In der Fig. 1 ist ein paralleler Verlauf des Gasstrahls 4 zum Laserstrahl 8 dargestellt. Dadurch verändert sich bei einer Veränderung der Höhe H in einer z-Richtung der Abstand A zwischen dem Auftreffbereich 5 des Gasstrahls 4 und der Bearbeitungsstelle 9 nicht. Daraus resultiert, daß etwa bei einer tieferen Gesenkbearbeitung, bei der etwa die Höhe H einen größeren Wert annimmt, reproduzierbare Strömungsbedingungen an der Bearbeitungsstelle 9 vorliegen, da die Ausbildung eines Isobaren- und Druckgradientenverlaufs und die Ausbildung des gesamten Strömungsverhaltens an der Bearbeitungsstelle 9 sich aufgrund eines sich verändernden Abstands A nicht ändern. Dies wäre etwa der Fall, wenn der Gasstrahl 4 relativ zum Laserstrahl 8 einen Winkel aufweisen würde. Dann würde sich der Abstand A bei einer Veränderung der Höhe H ändern.

In der Fig. 2 ist ein Isobarenverlauf 10 dargestellt. Der Isobarenverlauf 10 ergibt sich beim Auftreffen des Gasstrahls 4 auf die Werkstückoberfläche 6. Im Auftreffbereich 5 des Gasstrahls 4 liegt der höchste Gesamtdruck vor. Der Gesamtdruck nimmt mit größerwerdendem Abstand gemäß dem Isobarenverlauf 10 nach außen hin ab. Weiterhin ist ein Druckgradient $D_{max}$ dargestellt, der den maximalen Druckgradienten resultierend aus dem Isobarenverlauf darstellt. Natürlich liegt auch ein spiegelbildlicher Druckgradient auf der anderen Seite des Isobarenverlaufs 10 vor, der jedoch nicht dargestellt ist. Der Druckgradient $D_{max}$ schneidet eine Tangente $T_v$ an die Vorschubrichtung V in der Bearbeitungsstelle 9. Zwischen dem Druckgradienten $D_{max}$ und der Tangente $T_v$ ist ein Anstellwinkel $\alpha$ dargestellt. Dieser Anstellwinkel $\alpha$ kann beispielsweise 45° betragen. Weiterhin ist in der Fig. 2 der Abstand A zwischen dem Auftreffbereich 5 und der Bearbeitungsstelle 9 dargestellt.

Der Isobarenverlauf 10 weist eine längliche Form auf und besitzt eine Längsseite 11 und eine Querseite 12. An der Längsseite 11 des Isobarenverlaufs 10 ist der Abstand zwischen den Isobaren am geringsten, so daß sich dort ein maximaler Druckgradient $D_{max}$ ergibt. An der Querseite 12 des Isobarenverlaufs 10 ist der Druckgradient geringer, da dort die Abstände zwischen den einzelnen Isobaren größer sind.

Aus der Darstellung wird weiterhin ersichtlich, daß der Isobarenverlauf an der Längsseite 11 in einem Bereich B in etwa angenähert einer Geraden entspricht; d.h. die einzelnen Isobaren, zumindest die äußeren Isobaren, verlaufen annähernd als eine Gerade. Dadurch wird die Position des Auftreffbereichs 5 relativ zur Bearbeitungsstelle 9 in gewissen Grenzen unsensibel gegen eine Verschiebung entlang einer Achse, die normal auf dem dargestellten Druckgradienten $D_{max}$ steht. Somit kann die Reproduzierbarkeit der Laserbearbeitung verbessert werden, da kleinere Ungenauigkeiten der Abstands- bzw. Anstellwinkeleinstellung keinen Einfluß bzw. keine Verschlechterung der Laserbearbeitung hervorrufen.

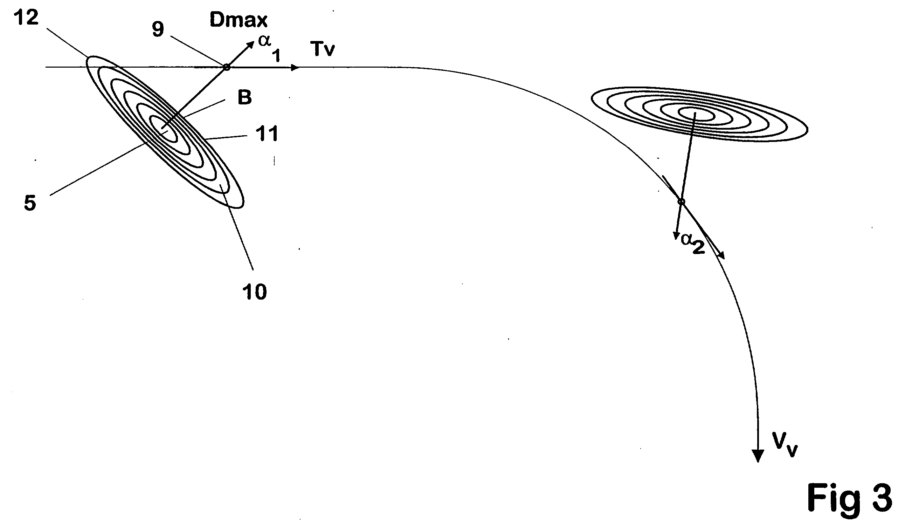

Der Anstellwinkel $\alpha$ ist über den Düsenbetätiger 2 einstellbar. Wie beispielsweise in der Fig. 3 gezeigt ist, kann auch ein Isobarenverlauf erzeugt werden, der auf der linken Seite des Vorschubverlaufs $V_v$ liegt (Vorschubrichtung nach unten in Fig. 3). Die Einstellung des Anstellwinkels $\alpha$ kann gemäß unterschiedlichen Kriterien gewählt werden. Beispielsweise kann der Anstellwinkel abhängig sein von der gewählten Vorschubgeschwindigkeit, dem gewählten Gasdruck, der Gesenktiefe, usw.

Weiterhin sei angemerkt, daß als Prozeßgas für die Düse Druckluft verwendet werden kann. Natürlich kann das Gas auch mit Sauerstoff angereichert werden, um den exothermen Anteil der Reaktion in der Wechselwirkungszone bzw. an der Bearbeitungsstelle 9 zu erhöhen. Natürlich können weiterhin auch andere Gase zum Einsatz kommen, beispielsweise Inertgas, Trockeneis oder abrasive Medien, einzeln oder zweckmäßig vermischt.

Durch den in den Fig. 2 und 3 dargestellten länglichen Isobarenverlauf 10 ist es möglich, die Schmelze in optimaler Weise in Richtung des Druckgradienten $D_{max}$ auszutreiben.

Der Abstand A wird weiterhin so gewählt, daß sich an der Bearbeitungsstelle 9 ein Maximum der kinetischen Energie der Gasmoleküle ausbildet. Dadurch kann zusätzlich eine weitere Verbesserung des Schmelzenaustriebs erreicht werden. Durch die zusätzlich erzielte Ausrichtung des Schmelzenaustriebs kann sichergestellt werden, daß sich die ausgetriebene Schmelze nicht in Bereichen des Werkstücks als wiedererstarrte Schmelze festsetzt, welche nicht mehr bearbeitet wird (wodurch die Oberflächengüte herabgesetzt werden würde). Erfindungsgemäß können derzeit bis zu 1000 mm³/min Abtragrate bei einer zufriedenstellenden Werkstückoberfläche erzielt werden. Es ist beispielsweise möglich, Abtragraten zwischen 150 und 200 mm³/min zu erzielen, bei gemittelten Rauhtiefen $R_z$ (DIN) von < 10 μm.

Wie voranstehend schon geschildert, wird die Hauptbewegungsrichtung der Schmelze durch den Verlauf des größten Druckgradienten $D_{max}$ vorgegeben. Es hat sich gezeigt, daß ein Anstellwinkel $\alpha$ von 45° zur Vorschubrichtung V bzw. zur Tangente $T_v$ einen sehr effektiven Schmelzaustrieb gewährleistet. Natürlich können auch andere Anstellwinkel $\alpha$ gewählt werden. Beispielsweise bei einer Abtragspur, die eine Richtungsänderung um etwa 90° bei einem kleinen Radius aufweist, kann es vorteilhaft sein, etwa am kleinsten Radius der Spur den Anstellwinkel $\alpha$ derart zu wählen, daß sich der Auftreffbereich 5 auf der Außenseite des Vorschubverlaufs $V_v$ befindet (vgl. auch Fig. 3).

Anstatt einem länglichen Isobarenverlauf sind auch andere Verläufe denkbar. Bei der Düsenkonstruktion sollte darauf geachtet werden, daß ein hoher Druckgradient erzeugt wird, dessen Richtung in gewissen Grenzen unsensibel auf kleinere Lageänderungen der Bearbeitungsstelle relativ zum Auftreffbereich des Gasstrahls ist. Hierbei ist nicht nur eine Lageänderung normal zum maximalen Druckgradienten, sondern auch entlang der Achse des Druckgradienten zu verstehen. Hierbei sei angemerkt, daß auch der längliche Isobarenverlauf eine hohe Unsensibilität gegen eine Veränderung des Abstands A aufweist. In diesem Zusammenhang wäre ein apfelförmiger Isobarenverlauf denkbar, der die größte Isobarendichte an seiner konkav gekrümmten Seite aufweist. Ein derartiger Isobarenverlauf hätte nur einen maximalen Druckgradienten und würde somit eine hohe Austriebswirkung verursachen.

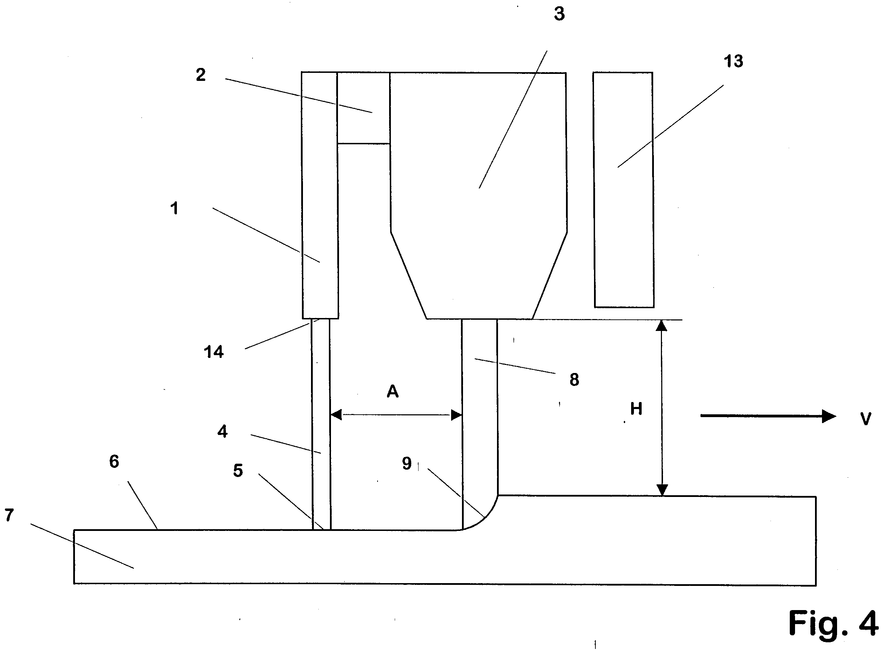

In der Fig. 4 ist eine zur Fig. 1 ähnliche Anordnung dargestellt. Im folgenden werden nur zur Fig. 1 unterschiedliche Elemente der Zeichnung erläutert. An dem Laserkopf 3 ist eine Zusatzdüse 13 angeordnet, welche zum Aufblasen von Trockeneis auf die Werkstückoberfläche 6 dient. Trockeneis ($CO_2$) kann beispielsweise mit einer Partikelgröße von 300 $\mu$m aus der Zusatzdüse 13 ausgeblasen werden. Diese $CO_2$-Partikel bzw. -Tropfen sind zum einen in der Lage, die Schmelze aufzureißen, so daß dadurch der Schmelzaustrag verbessert werden kann. Zum anderen kann das aufgebrachte Trockeneis anhaftendes, wiedererstarrtes Material von der Werkstückoberfläche entfernen, so daß sich eine weitere Verbesserung der Werkstückoberfläche ergibt. Beim Verdampfen des Trockeneises auf der Werkstückoberfläche bzw. beim Verdampfen in der Schmelze ergibt sich etwa eine Volumenvergrößerung um den Faktor 700. Dadurch ist es in vorteilhafter Weise möglich, beispielsweise das spröde an der Werkstückoberfläche 6 anhaftende wiedererstarrte Material abzulösen, so daß ein selektives Abrasivverfahren realisiert wird. Durch den Einsatz von Trockeneis kann eine Entoxidierung der Werkstückoberfläche 6 erreicht werden. Zudem ist Trockeneis umweltfreundlich, da es zu gasförmigem $CO_2$ verdampft und somit eine rückstandsfreie Bearbeitung ermöglicht.

Die Zusatzdüse 13 kann hierbei vorlaufend und nachlaufend relativ zur Vorschubrichtung V angeordnet werden. Natürlich ist es auch möglich, die Zusatzdüse 13 quer zur Vorschubrichtung V oder in jeder anderen Position anzuordnen.

Zur weiteren Verbesserung des Schmelzenaustrags kann dem Laser während des Laserpulses eine bestimmte Anzahl von stark überhöhten Güteschaltungspulsspitzen aufmoduliert werden. Dies kann beispielsweise durch entsprechende Schaltungstechniken (wie Laser mit Q-Switch, usw.) realisiert werden. Die Güteschaltungspulsspitzen können dabei eine Leistung aufweisen, die etwa das 20-fache einer normalen Pulsleistung besitzen.

Durch diese starke Überhöhung der Güteschaltungspulsspitzen kann die Temperatur der Schmelze bei Anlegen dieser Überhöhungspulse stark erhöht werden. Dadurch sinken die Oberflächenspannung und die Viskosität der Schmelze. Durch die geringere Oberflächenspannung und die niedrigere Viskosität der Schmelze kann der Schmelzaustrieb weiter verbessert werden, da die über die Schmelze streichenden Gasmoleküle leichter Schmelzenpartikel mitreißen können.

Weiterhin kann erfindungsgemäß ein Steuerverfahren realisiert werden, das eine Bahnplanung ausführt. Unter Bahnplanung wird in diesem Zusammenhang die Planung sämtlicher Vorgänge bei der Bearbeitung des Werkstücks mittels Schmelzabtragens verstanden. Da vor Beginn eines Abtragvorgangs schon die Wunschgeometrie des fertigen Bauteils bekannt ist, kann gemäß einer Datenbank und/oder gemäß formelmäßigen Gesetzmäßigkeiten eine Bahnplanung erfolgen. Hierbei kann beispielsweise eine quadratische Gleichung mit drei Konstanten a, b, c, die Funktionen der Geschwindigkeit V sind, verwendet werden: $T = a \cdot P^2 + b \cdot P + c$ (T: Abtragstiefe; P: mittlere Laserleistung).

Weiterhin kann beispielsweise die Leistung P eine Funktion der Abtragtiefe T sein und über einen Parameter (beispielsweise die Vorschubgeschwindigkeit) in einer Tabelle abgelegt sein.

Als weiterer Ausgabewert kann beispielsweise der Anstellwinkel $\alpha$ abhängig von der Werkstückkontur (d.h. beispielsweise der Form der zu fahrenden Spur) eingestellt werden. Natürlich kann sich der Anstellwinkel $\alpha$ zusätzlich auch durch die gerade bearbeitete Gesenktiefe, abhängig von der Vorschubgeschwindigkeit, usw., ändern.

Oben genannte Steuermaßnahmen sollen lediglich Beispiele von möglichen Steuerprinzipien darstellen.

**Patentansprüche**

1. Vorrichtung zum Bearbeiten von Werkstücken mit

   - einem Laser zum Emittieren eines Laserstrahls (8) und
   - einer Düse (1) zum Aufbringen eines gerichteten Gasstrahls (4) auf die Werkstückoberfläche (6), wobei der Gasstrahl (4) mit einem Abstand A zu einer Bearbeitungsstelle (9) des Laserstrahls (8) auf die Werkstückoberfläche (6) trifft, und wobei die Bearbeitungsstelle (9) relativ zu einem Auftreffbereich (5) des Gasstrahls (4) auf der Werkstückoberfläche (6) im wesentlichen in Richtung des größten Druckgradienten $D_{max}$ angeordnet ist, der durch den auf die Werkstückoberfläche (6) auftreffenden Gasstrahl (4) verursacht wird.

2. Vorrichtung nach Anspruch 1, dadurch gekennzeichnet, daß der auf die Werkstückoberfläche (6) treffende Gasstrahl (4) parallel zum Laserstrahl (8) verläuft und/oder senkrecht zur Werkstückoberfläche (6) ausgerichtet ist.

3. Vorrichtung nach Anspruch 1 oder 2, dadurch gekennzeichnet, daß der Abstand A zwischen der Bearbeitungsstelle (9) und dem Auftreffbereich (5) zur Erzielung einer maximalen kinetischen Energie der Gasmoleküle an der Bearbeitungsstelle (9) gewählt wird.

4. Vorrichtung nach einem der Ansprüche 1 bis 3, dadurch gekennzeichnet, daß die Düse (1) an einer Gasaustrittsstelle (14) eine im wesentlichen rechteckige Querschnittsform aufweist und als Laval-Düse ausgebildet ist.

5. Vorrichtung nach einem der Ansprüche 1 bis 4, dadurch gekennzeichnet, daß die Düse (1) derart ausgebildet ist, daß ein länglicher Isobarenverlauf (10) resultiert.

6. Vorrichtung nach einem der Ansprüche 1 bis 5, dadurch gekennzeichnet, daß zwei diametral entgegengesetzt angeordnete Düsen (1) vorgesehen sind, deren Gasstrahlen (4) schiefwinklig aufeinandertreffen und einen resultierenden Gasstrahl (4) bilden, der parallel zum Laserstrahl (8) verläuft und/oder senkrecht zur Werkstückoberfläche (6) ausgerichtet ist.

7. Vorrichtung nach einem der Ansprüche 1 bis 6, dadurch gekennzeichnet, daß der größte Druckgradient $D_{max}$ relativ zu einer Vorschubrichtung V des Werkstücks (7) und/oder eines Laserkopfs (3) einen Winkel zwischen 0°-180° einnimmt, vorzugsweise einen Winkel von 45°.

8. Vorrichtung nach einem der Ansprüche 1 bis 7, dadurch gekennzeichnet, daß die Düse (1) relativ zum Laserkopf (3) drehbar angeordnet ist und die sechste Achse einer 6-Achs-Laserbearbeitungsmaschine darstellt.

9. Vorrichtung nach einem der Ansprüche 1 bis 8, dadurch gekennzeichnet, daß auf die Werkstückoberfläche (6) Trockeneis bzw. ein abrasives Medium aufgebracht wird, das durch Verdampfung im Prozeß das abzutragende Material austreibt und eine Nachreinigung der bearbeiteten Werkstückoberfläche (6) durchführt.

10. Vorrichtung nach einem der Ansprüche 1 bis 9, dadurch gekennzeichnet, daß dem Laser Leistungsspitzen aufmoduliert werden, um ein Aufreißen der Oberfläche der Schmelze zu fördern.

11. Verfahren zum Bearbeiten von Werkstücken mit den Schritten:

- Emittieren eines Laserstrahls (8) durch einen Laser,
- Aufbringen eines Gasstrahls (4) auf eine Werkstückoberfläche (6) mit einem Abstand A zu einer Bearbeitungsstelle (9) des Laserstrahls (8), und
- Anordnen der Düse (1) derart, daß die Bearbeitungsstelle (9) im wesentlichen in Richtung eines größten Druckgradienten $D_{max}$ angeordnet ist, der aus dem auf die Werkstückoberfläche (6) treffenden Gasstrahl (4) resultiert.

12. Verfahren nach Anspruch 11, dadurch gekennzeichnet, daß die Düse (1) bezüglich des Laserstrahls (8) dreh- und/oder verschiebbar angeordnet ist.

13. Verfahren nach Anspruch 11 oder 12, dadurch gekennzeichnet, daß die Düse (1) über eine sechste Maschinenachse relativ zur Vorschubrichtung V des Werkstücks (7) und/oder des Laserkopfs (3) gedreht und/oder verschoben werden kann, abhängig beispielsweise von dem Material des Werkstücks (7), der bearbeiteten Kontur, der Verfahrgeschwindigkeit des Werkstücks (7) bzw. des Laserkopfs (3), der Laserleistung und/oder von Signalen eines Abstands- und/oder Tiefensensors.

EP 0 836 907 A2

**Fig. 1**

Fig. 2

EP 0 836 907 A2

**Fig 3**

EP 0 836 907 A2

Fig. 4